# EUROPEAN PATENT SPECIFICATION

(11) **EP 4 437 044 B1**
(45) Date of publication and mention of the grant of the patent: **03.06.2026**
(21) Application number: 21964999.3
(22) Date of filing: 23.11.2021
(51) Int. Cl.: C08L 83/04, C08L 83/06, C08L 83/07

(54) **CURABLE THERMALLY CONDUCTIVE COMPOSITION CONTAINING DIAMOND PARTICLES**
HÄRTBARE WÄRMELEITENDE ZUSAMMENSETZUNG MIT DIAMANTPARTIKELN
COMPOSITION THERMOCONDUCTRICE DURCISSABLE CONTENANT DES PARTICULES DE DIAMANT

(43) Date of publication of application: 02.10.2024
(73) Proprietor: Dow Global Technologies LLC, Midland, MI 48674 (US); Dow Silicones Corporation, Midland, Michigan 48686 (US)
(72) Inventor: WANG, Chenxu, Shanghai 201203 (CN); ZHENG, Yan, Shanghai 201203 (CN); HE, Chao, Shanghai 201203 (CN); CHEN, Hongyu, Shanghai 201203 (CN); CHEN, Chen, Shanghai 201203 (CN)
(74) Representative: Murgitroyd & Company
(86) International application number: PCT/CN2021/132300
(87) International publication number: WO 2023/092255

(56) References cited:
- WO-A1-2021/109051
- WO-A1-2021/223095
- JP-A- 2009 203 373
- US-A1- 2007 246 245
- US-A1- 2017 349 801
- US-A1- 2020 157 350

## Description

### Field of the Invention

The present invention relates to curable thermally conductive compositions as claimed that contain thermally conductive fillers including diamond particles having a Dv50 particle size in a range of 60 to 150 micrometers.

### Introduction

An industry drive to smaller and more powerful electronic devices has increased demands on thermally conductive compositions useful for dissipating heat generated in such devices. For instance, the telecommunications industry is going through a generational shift to 5G networks, which demand highly integrated electrical devices with smaller sizes and that brings a requirement for double the power requirements (1200 Watts from 600 Watts). The heat generated by the high power in the smaller devices would damage the device if not efficiently dissipated. Thermally conductive interface materials are often used in electronics to thermally couple heat generating components and heat dissipating components. For example US 2017/349801 A1 discloses in example 6 an addition curable heat conducting silicone composition comprising vinyl-terminated PDMS, hydrosilyl-polysiloxane, filler treating agents being polysiloxanes with trimethoxysilyl end groups, and thermally conducting fillers comprising diamond, aluminum and alumina.

A challenge with thermally conductive interface materials is to provide a combination of both high thermal conductivity properties while being easily extrudable so as to allow precise application of the thermally conductive material on small components. In particular, it is desirably to provide a thermally conductive interface material that has an extrusion rate of greater than 60 grams per minute as measured using the Extrusion Rate Test defined herein below and that cures to a material that has a thermal conductivity of at least 8 Watts per meter*Kelvin. Thermal conductivity can be increased by increasing the amount of thermally conductive filler, but that also reduces the extrusion rate for a composition. So meeting these two performance parameters is particularly challenging.

### BRIEF SUMMARY OF THE INVENTION

The present invention provides a thermally conductive interface material that has an extrusion rate of greater than 60 grams per minute (g/min) as measured using the Extrusion Rate Test defined herein below and that cures to a material that has a thermal conductivity of at least 8 Watts per meter*Kelvin (W/m*K).

Surprisingly, it has been determined such a composition can be prepared from a curable polysiloxane composition that contains 94 to 97 weight-percent (wt%) thermally conductive filler that includes 30 to 55 weight-percent (wt%) diamond particles having a Dv50 in a range of 60 to 150 micrometers, where wt% is relative to curable polysiloxane composition weight.

In a first aspect, the present invention is a curable thermally conductive composition comprising: (a) a vinyl-functional silicone polymer that is one or a combination of more than one vinyldimethyl terminated polydimethylsiloxane, the vinyl-functional silicone polymer having a viscosity in a range of 30 to 2000 millipascal*seconds as determined by ASTM D445-21 using a glass capillary Cannon-Fenske type viscometer at 25 degrees Celsius at a concentration in a range of one to 4.0 weight-percent; (b) at least one silyl-hydride functional polysiloxane crosslinker that contains at least two silyl-hydride groups per molecule and that is present at a concentration to provide a molar ratio of silyl-hydride groups to vinyl groups for the composition that is in a range of 0.5 to 1.0; (c) filler treating agents at a concentration in a range of 0.1 to 2.0 weight-percent, the filler treating agents comprising any one or any combination of more than one trialkoxysilyl compound; (d) thermally conductive filler at a concentration in a range of 94 to 97 weight-percent, where the thermally conductive filler comprises: (i) diamond particles having a Dv50 in a range of 60 to 150 micrometers at a concentration in a range of 30 to 55 weight-percent; (ii) thermally conductive fillers having a Dv50 in a range of greater than one to 10 micrometers at a concentration in a range of 25 to 35 weight-percent; (iii) thermally conductive fillers having a Dv50 in a range of 0.1 to one micrometers at a concentration in a range of 10 to 20 weight-percent; and (iv) optionally, thermally conductive filler having a Dv50 in a range of 20 to 60 micrometers at a concentration in a range of zero to 20 weight-percent; where weight-percentages are relative to curable thermally conductive composition weight.

In a second aspect, the present invention is a process for using the curable thermally conductive composition of the first aspect, the process comprising applying the curable thermally conductive composition between and in contact with two components and then heating the curable composition to cure the curable composition while in place between the components

In a third aspect, the present invention is an article comprising the curable thermally conductive composition of the first aspect between and in contact with two components of the article, wherein the curable thermally conductive composition is in either a cured or non-cured form.

The composition of the present invention is useful as a thermally conductive interface material to efficiently transfer heat between two components. The process of the present invention is useful to applying the composition of the present invention. The article of the present invention is useful as a device benefiting from efficient thermal conduction between components.

### DETAILED DESCRIPTION OF THE INVENTION

Test methods refer to the most recent test method as of the priority date of this document when a date is not indicated with the test method number. References to test methods contain both a reference to the testing society and the test method number. The following test method abbreviations and identifiers apply herein: ASTM refers to ASTM International methods; EN refers to European Norm; DIN refers to Deutsches Institut für Normung; ISO refers to International Organization for Standards; and UL refers to Underwriters Laboratory.

Products identified by their tradename refer to the compositions available under those tradenames on the priority date of this document.

"Multiple" means two or more. "And/or" means "and, or as an alternative". All ranges include endpoints unless otherwise indicated.

Determine particle size (which is used interchangeable with "average particle size" and "Dv50") as the volume-weighted median value of particle diameter distribution (Dv50) using a Mastersizer^{™} (trademark of Malvern Instruments Limited) 3000 laser diffraction particle size analyzer from Malvern Instruments.

Determine viscosity, unless otherwise stated, according to ASTM D445-21 using a glass capillary Cannon-Fenske type viscometer at 25 degrees Celsius.

Measure thermal conductivity for cured composition samples using a Hot Disk TPS 2500 S instrument that meets ISO 22007-2 with cured samples. The sensor is model 5465 (3.189 millimeter Kapton sensor). Prepare cured samples for thermal conductivity evaluation by curing samples having dimensions of 25 millimeters by 25 millimeters square by 8 millimeters thick at 120 degrees Celsius (°C) for 60 minutes.

Measure extrusion rate (ER) for a composition using the following Extrusion Rate Test using Nordson EFD dispensing equipment. Package a sample composition into a 30 milliliter syringe with a 2.54 millimeter opening (EFD syringe from Nordson Company). Dispense the sample through the opening by applying a pressure of 0.62 MegaPascals to the syringe plunger. Record the mass of the sample in grams that is expelled through the 2.54 millimeter opening during the course of one minute to obtain an extrusion rate value in grams per minute (g/min).

The present invention, in one aspect, is a curable thermally conductive composition. In that regard, it is a "curable composition". A curable composition can undergo a crosslinking reaction ("curing"). In the present composition, the crosslinking reaction is a hydrosilylation reaction between vinyl-functional silicone polymer components and silyl-hydride (Si-H) functional polysiloxane crosslinker.

The vinyl-functional silicone polymer comprises, or consists of, one or any combination of more than one vinyldimethyl terminated polydimethylsiloxane provided the vinyl-functional silicone polymer has a viscosity in a range of 30 to 2000 millipascal*seconds (mPa*s). When the vinyl-functional silicone polymer is a combination of more than one vinyldimethyl terminated polydimethylsiloxane then the viscosity is the combined viscosity of vinyldimethyl terminated polydimethylsiloxanes. The viscosity of the vinyl-functional silicone polymer is 30 mPa*s or more, and can be 40 mPa*s or more, 50 mPa*s or more, 60 mPa*s or more, 70 mPa*s or more, 75 mPa*s or more, 78 mPa*s or more, 80 mPa*s or more, 100 mPa*s or more, 125 mPa*s or more, 150 mPa*s or more, 175 mPa*s or more, even 200 mPa*s or more, while at the same time is 2000 mPa*s or less, 1500 mPa*s or less, 1000 mPa*s or less, 500 mPa*s or less, and desirably is 400 mPa*s or less, 300 mPa*s or less, 200 mPa*s or less, 150 mPa*s or less, 100 mPa*s or less, 90 mPa*s or less, even 80 mPa*s or less.

Each vinyldimethyl terminated polydimethylsiloxane can have an average chemical structure (I):

Vi(CH₃)₂SiO-((CH₃)₂SiO)_{d}-Si(CH₃)₂Vi (I)

where subscript d is the average number of ((CH₃)₂SiO) groups per molecule and has a value of 25 or more, 30 or more, 40 or more, 50 or more, 60 or more 70 or more, 80 or more, 90 or more, 100 or more, 120 or more, 140 or more, 160 or more, 180 or more, 200 or more, 220 or more, 240 or more, 260 or more, 280 or more, 300 or more, 320 or more, even 340 or more, and at the same time 350 or less, 340 or less, 320 or less, 300 or less, 280 or less, 260 or less, 240 or less, 240 or less, 220 or less, 200 or less, 180 or less, 160 or less, 140 or less, 120 or less, 100 or less, 80 or less, 60 or less, even 40 or less. For example, the vinyl-functional silicone polymer can be a vinyldimethyl terminated polydimethylsiloxane having a viscosity of 78 mPa*s and containing 1.25 weight-percent (wt%) vinyl groups relative to molecular weight such as that available from Gelest under the name SMS-V21.

The concentration of vinyl-functional silicone polymer is one wt% or more and can be 2.0 wt% or more, 2.5 wt% or more, 2.7 wt% or more, even 3.0 wt% or more while at the same time is 4.0 wt% or less and can be 3.5 wt% or less, even 3.3 wt% or less relative to curable thermally conductive composition weight.

The curable thermally conductive composition further comprises at least one silyl-hydride (SiH) functional polysiloxane crosslinker. The SiH functional crosslinker contains at least two SiH groups per molecule. The SiH groups can be pendant, terminal or a combination of both pendant and terminal. "Terminal" groups are on end siloxane groups of a molecule. "End" siloxane groups are attached to only one other siloxane group. "Pendant" groups are on interior siloxane group - siloxane groups bound to at least two other siloxane groups - of the molecule. "Siloxane group" is a group containing SiO that is bound to another Si through the oxygen of the SiO.

The SiH functional polysiloxane crosslinker can have an average chemical structure (II):

R₍₃₋ₕ₎HₕSiO-(HRSiO)ₐ-(R₂SiO)_{b}-SiH_{h'}R(₃-_{h'}) (II)

where:
R is independently in each occurrence selected from alkyl and aryl groups having from one to 6 carbon atoms. The R group can have one carbon or more, 2 carbons or more, 3 carbons or more, 4 carbons or more, even 5 carbons or more while at the same time 6 carbons or fewer, 5 carbons or fewer, 4 carbons or fewer, 3 carbons or fewer, or even 2 carbons or fewer. Desirably, the R group is independently in each occurrence selected from methyl and phenyl groups.
H is a hydrogen atom,
Subscripts h and h' refer the average number of terminal hydrogen atoms on either end and each are independently in each occurrence selected from a value in a range of zero to 3 provided the combination of a, h and h' is at least 2. Preferably, h and h' are independently in each occurrence zero or more, one or more, even 2 or more while at the same time 3 or less, 2 or less, even one or less. More preferably, h and h' have the same value. Most preferably, h and h' are both zero.
Subscript a is the average number of (HRSiO) groups per molecule. If h and h' are both zero then a is 2 or more. If h and h' are both non-zero then subscript a can be zero provided the combination of a, h and h' is 2 or more. Preferably, subscript a is one or more, and can be two or more and can be 3 or more, 4 or more, 5 or more, 6 or more, 7 or more, 8 or more, even 9 or more and at the same time typically is 10 or less, 9 or less, 8 or less, 7 or less, 6 or less, 5 or less, 4 or less, 3 or less, even 2 or less.
Subscript b is the average number of (R₂SiO) groups per molecule. Generally, subscript b is 5 or more, 10 or more, 20 or more, 25 or more, 30 or more, 40 or more, 50 or more, and can be 75 or more, 100 or more, 125 or more, 150 or more, 175 or more, even 190 or more while at the same time is typically 200 or less, 175 or less, 150 or less, 125 or less, 100 or less, 75 or less, 50 or less, 40 or less, 30 or less, even 25 or less, or even 20 or less.

The SiH functional polysiloxane crosslinker can be one or a combination of both polymers selected from a group consisting of: : (i) trimethyl terminated dimethyl-co-hydrogen methyl polysiloxane with a viscosity of 14 millipascals*seconds and containing 0.36 weight-percent hydrogen in silylhydride groups ; and (ii) hydride terminated polydimethylsiloxane having a viscosity in a range of 7-10 millipascals*seconds and containing 0.16 weight-percent hydrogen in silylhydride groups.

The concentration of SiH functional polysiloxane crosslinker is sufficient to provide a molar ratio of SiH groups to vinyl groups (SiH/Vi ratio) that is 0.5 or higher, and can be 0.6 or higher, 0.7 or higher, 0.8 or higher, even 0.9 or higher while at the same time is 1.0 or less and can be 0.9 or less, 0.8 or less, 0.7 or less, or even 0.6 or less. The SiH/Vi ratio determines the extent of crosslinking that occurs when the curable thermally conductive composition cures. If the SiH/vinyl ratio is too low, then the composition does not cure enough to provide sufficient vertical stability. If the SiH/vinyl ratio is too high then the composition cures so much it becomes brittle and tends to suffer from surface cracking.

The curable thermally conductive composition comprises filler treating agents. Filler treating agents are trialkoxysilyl compounds, which are compounds that contain a -Si(OR)₃ group, where each R is independently in each occurrence as described for R herein above.

The filler treating agent is desirably one or any combination of more than one component selected from a group consisting of alkyl trialkoxysilanes and monotrialkoxysiloxy terminated diorganopolysiloxanes.

Suitable alkyl trialkoxysilanes include those having the chemical formula R^{a}(R^{b}O)₃Si where each of R^{a} and R^{b} is independently in each occurrence an alkyl having 1 or more, 2 or more, 3 or more, 4 or more, 5 or more, 6 or more, 7 or more, 8 or more, 9 or more, 10 or more even 11 or more carbon atoms while at the same time typically contains 20 or fewer, 18 or fewer, 16 or fewer, 14 or fewer, 12 or fewer, and can contain 10 or fewer carbon atoms. R_{b} is desirably methyl so as to form methoxyl groups attached to the silicon atom. A particularly desirably alkyltrialkoxysilane is n-decyltrimethoxysilane.

Suitable monotrialkoxysiloxy-terminated diorganopolysiloxanes include those having the average chemical formula R^{c}₃SiO[R^{d}₂SiO]_{g}Si(OR^{e})₃ where each R^{c}, R^{d} and R^{e} is independently in each occurrence selected from hydrocarbyls having one or more, and can have 2 or more, 3 or more, 4 or more, 5 or more, 6 or more, 7 or more, even 8 or more carbon atoms while at the same time typically contain 10 or fewer, 8 or fewer, 6 or fewer, 4 or fewer, even 2 or fewer carbon atoms and subscript g typically has a value of 20 or more, 30 or more, 40 or more, 50 or more, 60 or more, 70 or more, 80 or more, 90 or more, 100 or more, even 110 or more while at the same time typically has a value of 200 of less, 150 or less, 125 or less, 120 or less, or even 110 or less. A particularly desirable monotrialkoxysiloxy-terminated diorganopolysiloxane has the average chemical formula (CH₃)₃SiO[(CH₃)₂SiO]₃₀Si(OCH₃)₃.

The concentration of filler treating agent is 0.1 wt% or more, 0.2 wt% of more, 0.3wt% or more, 0.4 wt% or more, 0.5 wt% or more, 0.6 wt% or more, 0.7 wt% or more, 0.8 wt% or more, 0.9 wt% or more, 1.0 wt% or more, 1.2 or more, 1.3 wt% or more, even 1.4 or more while at the same time is typically 2.0 wt% or less, 1.8 wt% or less, 1.6 wt% or less, 1.4 wt% or less, 1.3 or less, or even 1.2 or less, with wt% relative to curable composition weight.

For example, the curable composition can comprise any one or any combination of n-decyltrimethoxysilane and (CH₃)₃SiO[(CH₃)₂SiO]₃₀Si(OCH₃)₃. Preferably, the curable composition can comprise of 0.2 weight-percent n-decyltrimethoxy silane and 0.10-0.12 weight-percent of monotrimethoxysiloxy and trimethylsiloxy terminated polydimethylsiloxane having an average chemical structure

(CH₃)₃SiO[(CH₃)₂SiO]₃₀Si(OCH₃)₃.

The curable thermally conductive composition further comprises thermally conductive filler. The concentration of thermally conductive filler is 94 wt% or more, and can be 94.5 wt% or more, 95 wt% or more, even 95.5 wt% or more while at the same time is typically 97 wt% or less, and can be 96 wt% or less, 95.5 wt% or less, even 95 wt% or less with wt% relative to curable composition weight.

The thermally conductive filler comprises, and can consist of, a combination of at least three, optionally four, different thermally conductive fillers.

The first thermally conductive filler is diamond particles having a Dv50 of 60 micrometers or more, and can have a Dv50 of 70 micrometers or more, 80 micrometers or more, 90 micrometers or more, 100 micrometers or more, 110 micrometers or more, 120 micrometers or more, 130 micrometers or more, even 140 micrometers or more while at the same time have a Dv50 of 150 micrometers or less, and can have a Dv50 of 140 micrometers or less, 130 micrometers or less, 120 micrometers or less, 110 micrometers or less, 100 micrometers or less, 90 micrometers or less, 80 micrometers or less, or even 70 micrometers or less. The concentration of the first thermally conductive filler is 30 wt% or more, 34 wt% or more, and can be 35 wt% or more, 40 wt% or more, even 50 wt% or more while at the same time is 55 wt% or less, and can be 50 wt% or less, 45 wt% or less, 40 wt% or less, or even 35 wt% or less with wt% relative to curable thermally conductive composition weight.

The second thermally conductive filler has a Dv50 of one micrometer or more and can have a Dv50 of 2 micrometers or more, 3 micrometers or more, 4 micrometers or more, even 5 micrometers or more while at the same time have a Dv50 of 10 micrometers or less, and can have a Dv50 of 9 micrometers or less, 8 micrometers or less, 7 micrometers or less, 6 micrometers or less, or even 5 micrometers or less. The concentration of the second thermally conductive filler is 25 wt% or more and can be 26 wt% or more, 28 wt% or more, 30 wt% or more, 32 wt% or more, even 34 wt% or more while at the same time is 35 wt% or less, and can be 33 wt% or less, 31 wt% or less, 29 wt% or less, even 27 wt% or less, with wt% relative to curable thermally conductive composition weight.

The third thermally conductive filler has a Dv50 of 0.1 or more and can have a Dv50 of 0.3 or more, 0.5 or more, 0.7 or more, even 0.9 or more while at the same time has a Dv50 of one or less, and can have a Dv50 of 0.8 or less, 0.6 or less, 0.4 or less, or even 0.2 or less. The concentration of the third thermally conductive filler is 10 wt% or more, and can be 12 wt% or more, 14 wt% or more, 16 wt% or more, even 18 wt% or more while at the same time is 20 wt% or less, and can be 19 wt% or less, 17 wt% or less, 15 wt% or less, 13 wt% or less, or even 11 wt% or less, with wt% relative to curable thermally conductive composition weight.

The fourth thermally conductive filler has a Dv50 of 20 micrometer or more, and can have a Dv50 of 25 micrometers or more, 30 micrometers or more, 35 micrometers or more, 40 micrometers or more, 45 micrometers or more, even 50 micrometers or more while at the same time has a Dv50 of 60 micrometers or less, and can have a Dv50 of 55 micrometers or less, 50 micrometers or less, or even 45 micrometers or less. The concentration of the fourth thermally conductive filler is zero wt% or more, and can be 2 wt% or more, 4 wt% or more, 6 wt% or more, 8 wt% or more, 10 wt% or more, 12 wt% or more, 14 wt% or more, 16 wt% or more, even 18 wt% or more while at the same time is 20 wt% or less, and can be 19 wt% or less, 17 wt% or less, 15 wt% or less, 13 wt% or less, or even 11 wt% or less, with wt% relative to curable thermally conductive composition weight.

The thermally conductive filler can comprise fillers in addition to these four thermally conductive fillers or be free of thermally conductive fillers other than these four.

The particles can have any shape such as spherical, irregular, crushed or platelet. Desirably, the second thermally conductive filler is one or both of spherical aluminum oxide and irregular aluminum nitride. Desirably, the third thermally conductive filler is crushed zinc oxide. Desirably, the fourth thermally conductive filler is spherical aluminum nitride.

Desirably, each thermally conductive filler is independently selected from a group consisting of diamond particles, aluminum nitride particles, aluminum oxide particles, zinc oxide particles, and boron nitride particles. Preferably, the first thermally conductive filler is selected from 34 weight-percent diamond particles having a Dv50 of 120 micrometers; or 30.5 weight-percent diamond particles having a Dv50 of 120 micrometers and 20 weight-percent diamond particles having a Dv50 of 20 micrometers; or 50.4 to 50.8 weight-percent diamond particles having a Dv50 of 60 micrometers.

Desirably, the second thermally conductive filler is one or a combination of both of aluminum nitride and aluminum oxide. Preferably, the second thermally conductive filler is selected from 30 weight-percent spherical aluminum oxide particles having a Dv50 in a range of 2 to 5 micrometers; or 19 weight-percent spherical aluminum oxide particles having a Dv50 of 2 micrometers in combination with 10 weight-percent irregular aluminum nitride particles having a Dv50 of 1.5 micrometers.

Desirably, the third thermally conductive filler is zinc oxide. Preferably, the third thermally conductive filler is 15 weight-percent irregular zinc oxide particles having a Dv50 of 0.2 micrometers.

Desirably, the fourth thermally conductive filler is aluminum nitride. Preferably, the fourth thermally conductive filler, when present, is 16.50 weight-percent of spherical aluminum nitride particles having a Dv50 in a range of 30 to 50 micrometers.

Typically, the curable thermally conductive composition further comprises a platinum-based hydrosilylation catalyst. Platinum-based hydrosilylation catalysts include compounds and complexes such as platinum (0)-1,3-divinyl-1,1,3,3-tetramethyldisiloxane (Karstedt's catalyst), H₂PtCl₆, di-µ.-carbonyl di-.π.-cyclopentadienyldinickel, platinum-carbonyl complexes, platinum-divinyltetramethyldisiloxane complexes, platinum cyclovinylmethylsiloxane complexes, platinum acetylacetonate (acac), platinum black, platinum compounds such as chloroplatinic acid, chloroplatinic acid hexahydrate, a reaction product of chloroplatinic acid and a monohydric alcohol, platinum bis(ethylacetoacetate), platinum bis(acetylacetonate), platinum dichloride, and complexes of the platinum compounds with olefins or low molecular weight organopolysiloxanes or platinum compounds microencapsulated in a matrix or core-shell type structure. The hydrosilylation catalyst can be part of a solution that includes complexes of platinum with low molecular weight organopolysiloxanes that include 1,3-diethenyl-1,1,3,3-tetramethyldisiloxane complexes with platinum. These complexes may be microencapsulated in a resin matrix. The catalyst can be 1,3-diethenyl-1,1,3,3-tetramethyldisiloxane complex with platinum. Typically, the platinum-based hydrosilylation catalyst is present at a concentration sufficient to provide a platinum concentration of 0.03 wt% or more, 0.04 wt% or more, 0.05 wt% or more, even 0.06 wt% or more while at the same time is typically 0.4 wt% or less, or 0.3 wt% or less, 0.2 wt% or less, 0.1 wt% or less, 0.09 wt% or less, 0.08 wt% or less, 0.07 wt% or less, 0.06 wt% or less, 0.05 wt% or less, or even 0.04 wt% or less with wt% relative to curable thermally conductive composition weight.

The curable thermally conductive composition can further comprise a cure inhibitor. Cure inhibitors can serve to stabilize the curable thermally conductive composition from premature curing and provide storage stability to the composition. Examples of suitable cure inhibitors include any one or any combination of more than one of acetylene-type compounds such as 2-methyl-3-butyn-2-ol; 3-methyl-1-butyn-3-ol; 3,5-dimethyl- 1-hexyn-3-ol; 2-phenyl-3-butyn-2-ol;3-phenyl- 1-butyn-3-ol; 1-ethynyl-1-cyclohexanol; 1,1-dimethyl-2-propynyl)oxy)trimethylsilane; and methyl(tris(l,l-dimethyl-2-propynyloxy))silane; ene-yne compounds such as 3-methyl-3-penten-l-yne and 3,5-dimethyl-3-hexen-l-yne; triazols such as benzotriazole; hydrazine-based compounds; phosphines-based compounds; mercaptane-based compounds; cycloalkenylsiloxanes including methylvinylcyclosiloxanes such as l,3,5,7-tetramethyl-1,3,5,7-tetravinyl cyclotetrasiloxane and l,3,5,7-tetramethyl-l,3,5,7-tetrahexenyl cyclotetrasiloxane.

The concentration of cure inhibitor is zero wt% or more, and can be 0.001 wt% or more, 0.002 wt% or more, even 0.003 wt% or more while at the same time is typically 0.5 wt% or less, or even 0.3 wt% or less, 0.1 wt% or less, 0.05 wt% or less, 0.01 wt% or less, or even 0.005 wt% or less, 0.004 wt% or less, or even 0.003 wt% or less with wt% relative to curable thermally conductive composition weight.

The present invention also includes a process for using the curable thermally conductive composition, the process comprising applying the curable thermally conductive composition between and in contact with two components and then heating the curable composition to cure the curable composition while in place between the components.

The present invention further includes an article comprising the curable thermally conductive composition and at least two components where the curable thermally conductive composition is between and in contact with the two components. The curable thermally conductive composition can be in either a cured or non-cured form.

### Examples

Table 1 lists the materials for use in the following Examples (Exs) and Comparative Examples (Comp Exs).

**Table 1**

| **Component** | **Description** | **Source** |
|---|---|---|
| Vi Polymer A-1 | Vinyl dimethyl terminated polydimethyl siloxane with a viscosity of 78 mPa*s and 1.25 wt% vinyl relative to molecular weight. | Available as SMS-V21 from Gelest. |
| SiH Crosslinker B-1 | Trimethyl terminated dimethyl-co-hydrogen methyl polysiloxane with a viscosity of 14 mPa*s and 0.36 wt% H from SiH groups. | Available as HMS-301 from Gelest. |
| SiH Crosslinker B-2 | Hydride terminated polydimethylsiloxane with a viscosity in a range of 7 to 10 mPa*s and 0.16 wt% H from SiH groups. | Available as HMS-H11 from Gelest. |
| Treating Agent C-1 | n-decyltrimethoxysilane | Available as SID2670.0 from Gelest. |
| Treating Agent C-2 | Monotrimethoxysiloxy and trimethylsiloxy terminated polydimethyl siloxane having an average chemical structure: (CH₃)₃SiO[(CH₃)₂SiO]₃₀Si(OCH₃)₃ | Synthesize according to the teachings in US2006/0100336. |
| TC Filler D-1 | Diamond particles have a Dv50 of 120 micrometers | Available from Yuxing Micron-diamond of China |
| TC Filler D-2 | Diamond particles with a Dv50 of 60 micrometers | Available from Yuxing Micron-diamond of China |
| TC Filler D-3 | Diamond particles with a Dv50 of 20 micrometers | Available from Yuxing Micron-diamond of China |
| TC Filler D-4 | Diamond particles with a Dv50 of 3 micrometers | Available from Yuxing Micron-diamond of China |
| TC Filler D-5 | Spherical Aluminum Nitride particles with a Dv50 of 50 micrometers | Available as ANF S-50 from Maruwa Ceramic Co. Ltd. of Japan |
| TC Filler D-6 | Spherical aluminum nitride particles with Dv50 of 30 micrometers | Available as ANF S-30 from Maruwa Ceramic Co. Ltd. of Japan |
| TC Filler D-7 | Spherical Aluminum Oxide with a Dv50 of 2 micrometers | Available as CB-P02 from Showa Cenko Co. Ltd. of Japan |
| TC Filler D-8 | Spherical Aluminum Oxide with a Dv50 of 5 micrometers | Available as CB-P05 from Showa Cenko Co. Ltd. of Japan |
| TC Filler D-9 | Irregular Aluminum Nitride particles with a Dv50 of 1.5 micrometers | Available as ANF-A01 from Maruwa Ceramic Co. Ltd. of Japan |
| TC Filler D-10 | Crushed Zinc Oxide particles with a Dv50 of 0.2 micrometers | Available as ZOCO 104 from Zochem |
| Catalyst E-1 | Karstedt's Catalyst composition | Available as SYL-OFF^{™} 4000 catalyst from the Dow Chemical Company. SYL-OFF is a trademark of Dow Coming Corporation |
| Inhibitor F-1 | Methyl(tris(1,1-dimethyl-2-propynyloxy))silane | Available as ACM83817714 from Alfa Chemistry |

Characterize each sample for extrusion rate using the Extrusion Rate Test and thermal conductivity using the method described herein, above. The objective is to obtain an extrusion rate of greater than 60 g/min and a thermal conductivity of at least 8 W/m*K. Table 2 contains characterization results for each sample composition.

**Table 2**

| **Component** | | **Sample Composition** | | | | | | | |
|---|---|---|---|---|---|---|---|---|---|
| | **Ex 1** | **Ex 2** | **Ex 3** | **Ex 4** | **Ex 5** | **Comp Ex A** | **Comp Ex B** | **Comp Ex C** | **Comp Ex D** |
| Vinyl Polymer A-1 | 2.700 | 2.695 | 2.700 | 3.287 | 2.700 | 3.174 | 4.581 | 10.653 | 7.627 |
| SiH Crosslinker B-1 | 0.040 | 0.040 | 0.040 | 0.040 | 0.040 | 0.040 | 0.039 | 0.157 | 0.038 |
| SiH Crosslinker B-2 | 0.500 | 0.499 | 0.500 | 0.598 | 0.500 | 0.615 | 0.877 | 1.097 | 1.036 |
| Treating Agent C-1 | 0.200 | 0.200 | 0.200 | 0.199 | 0.200 | 0.198 | 0.195 | 0.157 | 0.188 |
| Treating Agent C-2 | 1.000 | 1.198 | 1.000 | 1.195 | 1.000 | 1.190 | 1.170 | 1.332 | 1.130 |
| TC Filler D-1 | 34.000 | | 30.500 | | 34.000 | | | | |
| TC Filler D-2 | | 50.399 | | 50.797 | | | | | |
| TC Filler D-3 | | | 20.000 | | | 50.089 | 58.967 | | |
| TC Filler D-4 | | | | | | | | 56.008 | 56.968 |
| TC Filler D-5 | 16.500 | | | | | | | | |
| TC Filler D-6 | | | | | 16.500 | | | | |
| TC Filler D-7 | 30.000 | 29.940 | 30.000 | 18.824 | | 29.756 | | | |
| TC Filler D-8 | | | | | 30.000 | | | | |
| TC Filler D-9 | | | | 9.960 | | | | | |
| TC Filler D-10 | 15.000 | 14.970 | 15.000 | 14.940 | 15.000 | 14.878 | 34.113 | 30.550 | 32.957 |
| Catalyst E-1 | 0.060 | 0.060 | 0.060 | 0.060 | 0.060 | 0.060 | 0.058 | 0.047 | 0.056 |
| Inhibitor F-1 | 0.002 | 0.002 | 0.002 | 0.002 | 0.002 | 0.002 | 0.002 | 0.002 | 0.002 |
| **ER (g/min)** | 111 | 86 | 104 | 72 | 87 | 30 | 24 | 89 | 0 |
| **TC (W/m*K)** | 10.17 | 9.68 | 9.58 | 8.85 | 9.13 | 6.87 | 6.22 | 1.98 | N/A |

Samples that do not have diamond filler with a Dv50 in a range of 60-150 micrometers fail to achieve both an ER greater than 60 g/min and a thermal conductivity (TC) of at least 8 W/m*K even when the samples include diamond filler, just diamond filler that is smaller than 60-150 micrometers.

## Claims

1. A curable thermally conductive composition comprising:
a. a vinyl-functional silicone polymer that is one or a combination of more than one vinyldimethyl terminated polydimethylsiloxane, the vinyl-functional silicone polymer having a viscosity in a range of 30 to 2000 millipascal*seconds as determined by ASTM D445-21 using a glass capillary Cannon-Fenske type viscometer at 25 degrees Celsius at a concentration in a range of one to 4.0 weight-percent;
b. at least one silyl-hydride functional polysiloxane crosslinker that contains at least two silyl-hydride groups per molecule and that is present at a concentration to provide a molar ratio of silyl-hydride groups to vinyl groups for the composition that is in a range of 0.5 to 1.0;
c. filler treating agents at a concentration in a range of 0.1 to 2.0 weight-percent, wherein the filler treating agents are any one or any combination of more than one compound selected from trialkoxysilyl compounds;
d. thermally conductive filler at a concentration in a range of 94 to 97 weight-percent, where the thermally conductive filler comprises:
i. diamond particles having a Dv50 in a range of 60 to 150 micrometers at a concentration in a range of 30 to 55 weight-percent;
ii. thermally conductive fillers having a Dv50 in a range of greater than one to 10 micrometers at a concentration in a range of 25 to 35 weight-percent;
iii. thermally conductive fillers having a Dv50 in a range of 0.1 to one micrometers at a concentration in a range of 10 to 20 weight-percent; and
iv. optionally, thermally conductive filler having a Dv50 in a range of 20 to 60 micrometers at a concentration in a range of zero to 20 weight-percent;
where Dv50 are measured following the method of the description and weight-percentages are relative to curable thermally conductive composition weight.

2. The curable thermally conductive composition of Claim 1, wherein the curable thermally conductive composition further comprises:
e. platinum-based hydrosilylation catalyst at a concentration in a range of 0.03 to 0.4 weight-percent, with weight-precent referring to weight of platinum relative to curable thermally conductive composition weight.

3. The curable thermally conductive composition of Claim 1 or Claim 2, wherein the curable thermally conductive composition further comprises:
f. a cure inhibitor at a concentration in a range of 0.001 to 0.005 weight-percent, with weight-precent relative to curable thermally conductive composition weight.

4. The curable thermally conductive composition of any one previous Claim, wherein the vinyl-functional silicone polymer has an average chemical structure (I):
Vi(CH₃)₂SiO-((CH₃)₂SiO)_{d}-Si(CH₃)₂Vi (I)
where d is the average number of ((CH₃)₂SiO) groups and has a value of 25 or more and at the same time 350 or less.

5. The curable thermally conductive composition of any one previous Claim, wherein the silyl-hydride functional polysiloxane crosslinker is one or a combination of both polymers selected from a group consisting of: (i) trimethylterminated dimethyl-co-hydrogen methyl polysiloxane with a viscosity of 14 millipascals*seconds and containing 0.36 weight-percent hydrogen in silylhydride groups ; and (ii) hydride terminated polydimethylsiloxane having a viscosity in a range of 7-10 millipascals*seconds and containing 0.16 weight-percent hydrogen in silylhydride groups, where viscosity is as determined by ASTM D445-21 using a glass capillary Cannon-Fenske type viscometer at 25 degrees Celsius.

6. The curable thermally conductive composition of any one previous claim, wherein:
a. the thermally conductive fillers having a Dv50 in a range of greater than one to 5 micrometers are one or more than one selected from a group consisting of aluminum nitride and aluminum oxide;
b. The thermally conductive fillers having a Dv50 in a range of 0.1 to one micrometers are zinc oxide; and
c. aluminum nitride thermally conductive filler having a Dv50 in a range of 40 to 60 micrometers are present.

7. The curable thermally conductive composition of Claim 1, comprising:
a. vinyl dimethyl terminated polydimethylsiloxane having a viscosity in a range of 75 to 80 millipascal*seconds at a concentration in a range of 2.7 to 3.3 weight-percent;
b. a blend of 0.04 weight-percent trimethyl terminated dimethyl co-hydrogen methyl polysiloxane having a viscosity of 14 millipascal*seconds and 0.5 to 0.6 weight-percent of hydride terminated polydimethylsiloxane having a viscosity in a range of 7-10 millipascal*seconds;
c. a filler treating agent consisting of 0.2 weight-percent n-decyltrimethoxy silane and 0.10-0.12 weight-percent of monotrimethoxysiloxy and trimethylsiloxy terminated polydimethylsiloxane having an average chemical structure (CH₃)₃SiO[(CH₃)₂SiO]₃₀Si(OCH₃)₃;
d. thermally conductive filler consisting of:
i. 34 weight-percent diamond particles having a Dv50 of 120 micrometers; or 30.5 weight-percent diamond particles having a Dv50 of 120 micrometers and 20 weight-percent diamond particles having a Dv50 of 20 micrometers; or 50.4 to 50.8 weight-percent diamond particles having a Dv50 of 60 micrometers;
ii. 30 weight-percent spherical aluminum oxide particles having a Dv50 in a range of 2 to 5 micrometers; or 19 weight-percent spherical aluminum oxide particles having a Dv50 of 2 micrometers in combination with 10 weight-percent irregular aluminum nitride particles having a Dv50 of 1.5 micrometers;
iii. 15 weight-percent irregular zinc oxide particles having a Dv50 of 0.2 micrometers; and
iv. Optionally 16.50 weight-percent of spherical aluminum nitride particles having a Dv50 in a range of 30 to 50 micrometers.
e. 0.06 weight-percent of a platinum hydrosilylation catalyst; and
f. 0.002 weight-percent of methyl(tris(1,1,-dimethyl-2-propynyloxy))silane;
where weight-percent is relative to weight of the curable thermally conductive composition.

8. A process for using the curable thermally conductive composition of any one previous claim, the process comprising applying the curable thermally conductive composition between and in contact with two components and then heating the curable composition to cure the curable composition while in place between the components.

9. The process of Claim 8, wherein the applying of the curable thermally conductive composition involves extruding the curable thermally conductive composition.

10. An article comprising the curable thermally conductive composition of any one of Claims 1-7 between and in contact with two components of the article, wherein the curable thermally conductive composition is in either a cured or non-cured form.

## Patentansprüche

1. Härtbare wärmeleitfähige Zusammensetzung, umfassend:
a. ein vinylfunktionelles Silikonpolymer, das ein oder eine Kombination von mehr als einem vinyldimethylterminiertem Polydimethylsiloxan ist, wobei das vinylfunktionelle Silikonpolymer eine Viskosität in einem Bereich von 30 bis 2000 Millipascal*Sekunden aufweist, wie durch ASTM D445-21 unter Verwendung eines Glaskapillar-Cannon-Fenske-Typ-Viskosimeters bei 25 Grad Celsius bei einer Konzentration in einem Bereich von einem bis 4,0 Gewichtsprozent bestimmt;
b. mindestens einen silylhydridfunktionellen Polysiloxanvernetzer, der mindestens zwei Silylhydridgruppen pro Molekül enthält und der in einer Konzentration vorhanden ist, um ein Molverhältnis von Silylhydridgruppen zu Vinylgruppen für die Zusammensetzung bereitzustellen, das in einem Bereich von 0,5 bis 1,0 liegt;
c. Füllstoffbehandlungsmittel in einer Konzentration in einem Bereich von 0,1 bis 2,0 Gewichtsprozent, wobei die Füllstoffbehandlungsmittel eine beliebige oder eine beliebige Kombination von mehr als einer Verbindung sind, die aus Trialkoxysilylverbindungen ausgewählt ist;
d. wärmeleitfähigen Füllstoff in einer Konzentration in einem Bereich von 94 bis 97 Gewichtsprozent, wobei der wärmeleitfähige Füllstoff umfasst:
i. Diamantpartikel mit einem Dv50 in einem Bereich von 60 bis 150 Mikrometern in einer Konzentration in einem Bereich von 30 bis 55 Gewichtsprozent;
ii. wärmeleitfähige Füllstoffe mit einem Dv50 in einem Bereich von größer als eins bis 10 Mikrometer in einer Konzentration in einem Bereich von 25 bis 35 Gewichtsprozent;
iii. wärmeleitfähige Füllstoffe mit einem Dv50 in einem Bereich von 0,1 bis einem Mikrometer in einer Konzentration in einem Bereich von 10 bis 20 Gewichtsprozent; und
iv. optional wärmeleitfähiger Füllstoff mit einem Dv50 in einem Bereich von 20 bis 60 Mikrometern in einer Konzentration in einem Bereich von null bis 20 Gewichtsprozent;
wobei Dv50 gemäß dem Verfahren der Beschreibung gemessen werden und Gewichtsprozentangaben relativ zum Gewicht der härtbaren wärmeleitfähigen Zusammensetzung sind.

2. Härtbare wärmeleitfähige Zusammensetzung nach Anspruch 1, wobei die härtbare wärmeleitfähige Zusammensetzung ferner umfasst:
e. platinbasierter Hydrosilylierungskatalysator in einer Konzentration in einem Bereich von 0,03 bis 0,4 Gewichtsprozent, wobei sich Gewichtsprozent auf das Gewicht von Platin bezogen auf das Gewicht der härtbaren wärmeleitfähigen Zusammensetzung bezieht.

3. Härtbare wärmeleitfähige Zusammensetzung nach Anspruch 1 oder 2, wobei die härtbare wärmeleitfähige Zusammensetzung ferner umfasst:
f. einen Härtungsinhibitor in einer Konzentration in einem Bereich von 0,001 bis 0,005 Gewichtsprozent, wobei sich Gewichtsprozent auf das Gewicht der härtbaren wärmeleitfähigen Zusammensetzung bezieht.

4. Härtbare wärmeleitfähige Zusammensetzung nach einem der vorstehenden Ansprüche, wobei das vinylfunktionelle Silikonpolymer eine durchschnittliche chemische Struktur (I) aufweist:
Vi(CH₃)₂SiO-((CH₃)₂SiO)_{d}-Si(CH₃)₂Vi (I)
wobei d die durchschnittliche Anzahl der ((CH₃)₂SiO)-Gruppen ist und einen Wert von 25 oder mehr und gleichzeitig 350 oder weniger aufweist.

5. Härtbare wärmeleitfähige Zusammensetzung nach einem der vorstehenden Ansprüche, wobei der silylhydridfunktionelle Polysiloxanvernetzer eines oder eine Kombination beider Polymere ist, ausgewählt aus einer Gruppe bestehend aus: (i) trimethylterminiertem Dimethyl-co-Wasserstoff-Methyl-Polysiloxan mit einer Viskosität von 14 Millipascal*Sekunden und enthaltend 0,36 Gewichtsprozent Wasserstoff in Silylhydridgruppen; und (ii) hydridterminiertem Polydimethylsiloxan mit einer Viskosität in einem Bereich von 7 bis 10 Millipascal*Sekunden und enthaltend 0,16 Gewichtsprozent Wasserstoff in Silylhydridgruppen, wobei die Viskosität gemäß ASTM D445-21 unter Verwendung eines Glaskapillar-Viskosimeters vom Typ Cannon-Fenske bei 25 Grad Celsius bestimmt wird.

6. Härtbare wärmeleitfähige Zusammensetzung nach einem der vorstehenden Ansprüche, wobei:
a. die wärmeleitfähigen Füllstoffe mit einem Dv50 in einem Bereich von größer als eins bis 5 Mikrometern einer oder mehr als einer ausgewählt aus einer Gruppe, bestehend aus Aluminiumnitrid und Aluminiumoxid sind;
b. die wärmeleitfähigen Füllstoffe mit einem Dv50 in einem Bereich von 0,1 bis einem Mikrometer Zinkoxid sind; und
c. wärmeleitfähiger Aluminiumnitridfüllstoff mit einem Dv50 in einem Bereich von 40 bis 60 Mikrometern vorhanden ist.

7. Härtbare wärmeleitfähige Zusammensetzung nach Anspruch 1, umfassend:
a. vinyldimethylterminiertes Polydimethylsiloxan mit einer Viskosität in einem Bereich von 75 bis 80 Millipascal*Sekunden in einer Konzentration in einem Bereich von 2,7 bis 3,3 Gewichtsprozent;
b. eine Mischung aus 0,04 Gewichtsprozent trimethylterminiertem Dimethyl-co-wasserstoffmethyl-Polysiloxan mit einer Viskosität von 14 Millipascal*Sekunden und 0,5 bis 0,6 Gewichtsprozent hydridterminiertem Polydimethylsiloxan mit einer Viskosität in einem Bereich von 7 bis 10 Millipascal*Sekunden;
c. ein Füllstoffbehandlungsmittel, bestehend aus 0,2 Gewichtsprozent n-Decyltrimethoxysilan und 0,10 bis 0,12 Gewichtsprozent monotrimethoxysiloxy- und trimethylsiloxyterminiertem Polydimethylsiloxan mit einer durchschnittlichen chemischen Struktur (CH₃)₃SiO[(CH₃)₂SiO]₃₀Si(OCH₃)₃;
d. wärmeleitfähigen Füllstoff, bestehend aus:
i. 34 Gewichtsprozent Diamantpartikel mit einem Dv50 von 120 Mikrometern; oder 30,5 Gewichtsprozent Diamantpartikel mit einem Dv50 von 120 Mikrometern und 20 Gewichtsprozent Diamantpartikel mit einem Dv50 von 20 Mikrometern; oder 50,4 bis 50,8 Gewichtsprozent Diamantpartikel mit einem Dv50 von 60 Mikrometern;
ii. 30 Gewichtsprozent kugelförmige Aluminiumoxidpartikel mit einem Dv50 in einem Bereich von 2 bis 5 Mikrometern; oder 19 Gewichtsprozent kugelförmige Aluminiumoxidpartikel mit einem Dv50 von 2 Mikrometern in Kombination mit 10 Gewichtsprozent unregelmäßige Aluminiumnitridpartikel mit einem Dv50 von 1,5 Mikrometern;
iii. 15 Gewichtsprozent unregelmäßige Zinkoxidpartikel mit einem Dv50 von 0,2 Mikrometern; und
iv. Wahlweise 16,50 Gewichtsprozent kugelförmige Aluminiumnitridpartikel mit einem Dv50 in einem Bereich von 30 bis 50 Mikrometern.
e. 0,06 Gewichtsprozent eines Platin-Hydrosilylierungskatalysators; und
f. 0,002 Gewichtsprozent Methyl(tris(1,1-dimethyl-2-propinyloxy))silan;
wobei Gewichtsprozent relativ zum Gewicht der härtbaren wärmeleitfähigen Zusammensetzung ist.

8. Prozess zur Verwendung der härtbaren wärmeleitfähigen Zusammensetzung nach einem der vorstehenden Ansprüche, wobei der Prozess das Aufbringen der härtbaren wärmeleitfähigen Zusammensetzung zwischen und in Kontakt mit zwei Komponenten und anschließendes Erhitzen der härtbaren Zusammensetzung umfasst, um die härtbare Zusammensetzung zu härten, während sie sich zwischen den Komponenten befindet.

9. Prozess nach Anspruch 8, wobei das Aufbringen der härtbaren wärmeleitfähigen Zusammensetzung das Extrudieren der härtbaren wärmeleitfähigen Zusammensetzung beinhaltet.

10. Gegenstand, der die härtbare wärmeleitfähige Zusammensetzung nach einem der Ansprüche 1 bis 7 zwischen zwei Komponenten des Gegenstands und in Kontakt mit diesen umfasst, wobei die härtbare wärmeleitfähige Zusammensetzung entweder in gehärteter oder in ungehärteter Form vorliegt.

## Revendications

1. Composition thermoconductrice durcissable comprenant :
a. un polymère de silicone à fonctionnalité vinyle qui est un ou une combinaison de plus d'un polydiméthylsiloxane à terminaison vinyldiméthyle, le polymère de silicone à fonctionnalité vinyle ayant une viscosité comprise dans une plage de 30 à 2 000 millipascals*secondes telle que déterminée par la norme ASTM D445-21 à l'aide d'un viscosimètre de type Cannon-Fenske à capillaire en verre à 25 degrés Celsius à une concentration comprise dans une plage de un à 4,0 pour cent en poids ;
b. au moins un agent de réticulation polysiloxane à fonctionnalité hydrure de silyle qui contient au moins deux groupes hydrure de silyle par molécule et qui est présent à une concentration permettant d'obtenir un rapport molaire des groupes hydrure de silyle aux groupes vinyle pour la composition qui est compris dans une plage de 0,5 à 1,0 ;
c. des agents de traitement de charge à une concentration comprise dans une plage de 0,1 à 2,0 pour cent en poids, dans laquelle les agents de traitement de charge sont l'un quelconque ou toute combinaison de plus d'un composé choisi parmi des composés trialcoxysilyle ;
d. une charge thermoconductrice à une concentration comprise dans une plage de 94 à 97 pour cent en poids, où la charge thermoconductrice comprend :
i. des particules de diamant ayant un Dv50 compris dans une plage de 60 à 150 micromètres à une concentration comprise dans une plage de 30 à 55 pour cent en poids ;
ii. des charges thermoconductrices ayant un Dv50 compris dans une plage supérieure à un à 10 micromètres à une concentration comprise dans une plage de 25 à 35 pour cent en poids ;
iii. des charges thermoconductrices ayant un Dv50 compris dans une plage de 0,1 à un micromètre à une concentration comprise dans une plage de 10 à 20 pour cent en poids ; et
iv. facultativement, une charge thermoconductrice ayant un Dv50 compris dans une plage de 20 à 60 micromètres à une concentration comprise dans une plage de zéro à 20 pour cent en poids ;
où les Dv50 sont mesurés en suivant la méthode de la description et les pourcentages en poids sont relatifs au poids de la composition thermoconductrice durcissable.

2. Composition thermoconductrice durcissable selon la revendication 1, dans laquelle la composition thermoconductrice durcissable comprend en outre :
e. un catalyseur d'hydrosilylation à base de platine à une concentration comprise dans une plage de 0,03 à 0,4 pour cent en poids, le pourcentage en poids faisant référence au poids du platine par rapport au poids de la composition thermoconductrice durcissable.

3. Composition thermoconductrice durcissable selon la revendication 1 ou la revendication 2, dans laquelle la composition thermoconductrice durcissable comprend en outre :
f. un inhibiteur de durcissement à une concentration comprise dans une plage de 0,001 à 0,005 pour cent en poids, les pourcentages en poids étant relatifs au poids de la composition thermoconductrice durcissable.

4. Composition thermoconductrice durcissable selon l'une quelconque revendication précédente, dans laquelle le polymère de silicone à fonctionnalité vinyle a une structure chimique moyenne (I) :
Vi(CH₃)₂SiO-((CH₃)₂SiO)_{d}-Si(CH₃)₂Vi (I)
où d est le nombre moyen de groupes ((CH₃)₂SiO) et a une valeur de 25 ou plus et, en même temps, de 350 ou moins.

5. Composition thermoconductrice durcissable selon l'une quelconque revendication précédente, dans laquelle l'agent de réticulation polysiloxane à fonctionnalité hydrure de silyle est un ou une combinaison des deux polymères choisis dans un groupe constitué de : (i) un diméthyl-co-hydrogène méthyl polysiloxane à terminaison triméthyle ayant une viscosité de 14 millipascals*secondes et contenant 0,36 pour cent en poids d'hydrogène dans des groupes silylhydrure ; et (ii) un polydiméthylsiloxane à terminaison hydrure ayant une viscosité comprise dans une plage de 7 à 10 millipascals*secondes et contenant 0,16 pour cent en poids d'hydrogène dans des groupes silylhydrure, où la viscosité est telle que déterminée par la norme ASTM D445-21 à l'aide d'un viscosimètre de type Cannon-Fenske à capillaire en verre à 25 degrés Celsius.

6. Composition thermoconductrice durcissable selon l'une quelconque revendication précédente, dans laquelle :
a. les charges thermoconductrices ayant un Dv50 compris dans une plage de plus de un à 5 micromètres sont une ou plus d'une choisies dans un groupe constitué de nitrure d'aluminium et d'oxyde d'aluminium ;
b. les charges thermoconductrices ayant un Dv50 compris dans une plage de 0,1 à un micromètre sont de l'oxyde de zinc ; et
c. une charge thermoconductrice de nitrure d'aluminium ayant un Dv50 compris dans une plage de 40 à 60 micromètres sont présentes.

7. Composition thermoconductrice durcissable selon la revendication 1, comprenant :
a. un polydiméthylsiloxane à terminaison vinyldiméthyle ayant une viscosité comprise dans une plage de 75 à 80 millipascals*secondes à une concentration comprise dans une plage de 2,7 à 3,3 pour cent en poids ;
b. un mélange de 0,04 pour cent en poids de diméthyl co-hydrogène méthyl polysiloxane à terminaison triméthyle ayant une viscosité de 14 millipascals*secondes et 0,5 à 0,6 pour cent en poids de polydiméthylsiloxane à terminaison hydrure ayant une viscosité comprise dans une plage de 7 à 10 millipascals*secondes ;
c. un agent de traitement de charge constitué de 0,2 pour cent en poids de n-décyltriméthoxy silane et de 0,10 à 0,12 pour cent en poids de polydiméthylsiloxane à terminaison monotriméthoxysiloxy et triméthylsiloxy ayant une structure chimique moyenne (CH₃)₃SiO[(CH₃)₂SiO]₃₀Si(OCH₃)₃ ;
d. une charge thermoconductrice constituée de :
i. 34 pour cent en poids de particules de diamant ayant un Dv50 de 120 micromètres ; ou 30,5 pour cent en poids de particules de diamant ayant un Dv50 de 120 micromètres et 20 pour cent en poids de particules de diamant ayant un Dv50 de 20 micromètres ; ou 50,4 à 50,8 pour cent en poids de particules de diamant ayant un Dv50 de 60 micromètres ;
ii. 30 pour cent en poids de particules sphériques d'oxyde d'aluminium ayant un Dv50 compris dans une plage de 2 à 5 micromètres ; ou 19 pour cent en poids de particules sphériques d'oxyde d'aluminium ayant un Dv50 de 2 micromètres en combinaison avec 10 pour cent en poids de particules irrégulières de nitrure d'aluminium ayant un Dv50 de 1,5 micromètre ;
iii. 15 pour cent en poids de particules irrégulières d'oxyde de zinc ayant un Dv50 de 0,2 micromètre ; et
iv. Facultativement 16,50 pour cent en poids de particules sphériques de nitrure d'aluminium ayant un Dv50 compris dans une plage de 30 à 50 micromètres.
e. 0,06 pour cent en poids d'un catalyseur d'hydrosilylation au platine ; et
f. 0,002 pour cent en poids de méthyl(tris(1,1,-diméthyl-2-propynyloxy))silane ;
où le pourcentage en poids est relatif au poids de la composition thermoconductrice durcissable.

8. Procédé d'utilisation de la composition thermoconductrice durcissable selon l'une quelconque revendication précédente, le procédé comprenant l'application de la composition thermoconductrice durcissable entre deux composants et en contact avec eux, puis le chauffage de la composition durcissable pour faire durcir la composition durcissable alors qu'elle est en place entre les composants.

9. Procédé selon la revendication 8, dans lequel l'application de la composition thermoconductrice durcissable implique l'extrusion de la composition thermoconductrice durcissable.

10. Article comprenant la composition thermoconductrice durcissable selon l'une quelconque des revendications 1 à 7 entre deux composants de l'article et en contact avec eux, dans lequel la composition thermoconductrice durcissable est sous une forme durcie ou non durcie.
